# EUROPEAN PATENT APPLICATION

(11) **EP 1 859 913 A1**
(43) Date of publication of application: **28.11.2007**
(21) Application number: 07108776.1
(22) Date of filing: 23.05.2007
(51) Int. Cl.: B29C 35/02, B29C 35/04, B29D 22/00

(54) **A method and equipment for vulcanizing articles made from elastometric material, particularly raw rubber bellows for air springs**

(30) Priority: 25.05.2006 IT TO20060381
(71) Applicant: CF Gomma Spa, 25050 Passirano (Brescia) (IT)
(72) Inventor: CANCARINI, Pierfederico, I-25060, CELLATICA (Brescia) (IT); BESANA, Marco, I-20052, MONZA (Milano) (IT)
(74) Representative: Quinterno, Giuseppe

(57) **Abstract**

The method comprises the operations of:
providing a heatable mould (1) in which is formed a vulcanization chamber (4) in which an article (6), particularly a bellows (6), to be vulcanized is placed around an inflatable chamber or BOM chamber (5),
blowing an air-like medium into the inflatable chamber (5) and evacuating the air from the vulcanization chamber (6), in such a way that the said article (6) is expanded and pressed against the wall of the vulcanization chamber (4), and
then delivering to the inflatable chamber or BOM chamber (5) a flow of nitrogen preheated to a temperature in the range from 140°C to 180°C, delivered at a pressure in the range from 15 to 30 bar, and preferably from 20 to 25 bar, to the inflatable chamber or BOM chamber (5).

## Description

The present invention relates to a method and equipment for vulcanizing articles made from elastomeric material, particularly raw rubber bellows for air springs.

More specifically, the invention relates to a method comprising the operations of:
providing a heatable mould in which is formed a vulcanization chamber in which an article, particularly a bellows, to be vulcanized is placed around an inflatable chamber or BOM chamber,
blowing an air-like medium into the inflatable chamber and evacuating the air from the vulcanization chamber, in such a way that the said article is expanded and pressed against the wall of the vulcanization chamber, and
then delivering a gas heated to a predetermined temperature and having a predetermined pressure into the inflatable chamber, to vulcanize the article in the expanded configuration.

In the known methods according to the prior art, a flow of superheated water is fed into the inflatable chamber or BOM chamber. These known methods have considerable safety problems. This is because, if the mould is accidentally reopened while the vulcanization chamber is still pressurized, the sudden spontaneous expansion of the superheated water could have devastating effects. Further problems may be caused by accidental leaks of superheated water from the equipment associated with the mould, for example as a result of a fracture of a pipe or the tearing of a gasket. An operator who is accidentally struck by a jet of superheated water or steam may suffer serious injuries.

Further drawbacks relating to the use of superheated water arise from the fact that, although antioxidants are added to the water, it is still rather corrosive to metals. This causes serious problems of corrosion in pipes, valve bodies, heat exchangers and circulating pumps. The resulting rust can cause frequent blockage of filters. The gaskets are also subject to frequent rupture, and the mechanical seals of the pumps deteriorate rapidly.

One object of the present invention is therefore to propose a method which can overcome the aforementioned drawbacks of the prior art methods.

This and other objects are achieved according to the invention by a method of the type specified above, characterized in that the aforesaid gas is substantially nitrogen preheated to a temperature in the range from 140°C to 180°C, fed to the inflatable chamber or BOM chamber at a pressure in the range from 15 to 30 bar, and preferably from 20 to 25 bar.

The invention also relates to equipment for the application of the method described above.

The nitrogen required for the application of the method is conveniently obtained by separation from ambient air.

Since nitrogen is an inert gas, its use makes it possible to drastically reduce the phenomena of corrosion of metal parts and to increase the service life of gaskets. This enables savings to be made in terms of spare parts, and also enables the number and duration of maintenance and/or replacement operations to be reduced. These operations are also reduced by the decreased complexity of the equipment, which essentially requires a single pipe for delivering the nitrogen to the individual moulds.

At the end of a vulcanization cycle, the pressurized nitrogen introduced into the moulds is conveniently evacuated through a vent. This makes it possible to eliminate the discharge of hot water, which is rather costly because it has to comply with stringent regulations.

Further advantages of the invention reside in the reduction of the energy required to vulcanize an article, the decrease in rejection rates, the reduced degradation of the vulcanization chambers, and the reduction of the condensate discharged at the end of a vulcanization cycle.

The vulcanization cycle times are also considerably reduced, with consequent advantages in terms of increased output.

Other features and advantages of the invention will become clear from the following detailed description which is given, purely by way of non-limiting example, with reference to the attached drawings, in which:
Figure 1 is a schematic illustration, in partial section, of a vulcanizing mould which can be used for the application of the method according to the invention;
Figure 2 is a schematic illustration of a plant for separating nitrogen from the ambient area, for the purpose of using the nitrogen in a method according to the invention; and
Figures 3 to 5 are diagrams of an embodiment of equipment for the application of the method according to the invention.

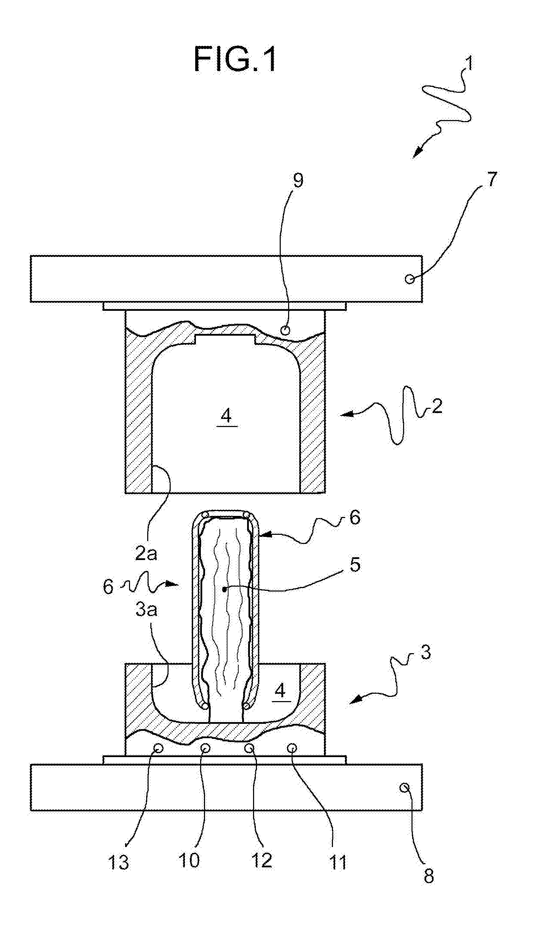

In Figure 1, the number 1 indicates the whole of a mould for vulcanizing articles made from elastomeric material, particularly raw rubber bellows for air springs.

The mould 1, which is of a known type, essentially comprises two portions or half-moulds 2 and 3, namely an upper and a lower portion respectively, which can be joined together in a sealed way.

The two portions 2 and 3 of the mould 1 have corresponding cavities 2a and 3a which, in the closed condition of the mould, combine to form a vulcanization chamber 4. In operation, a raw rubber article 6 to be vulcanized, particularly a bellows for an air spring, is placed in this chamber around an inflatable chamber or BOM chamber 5. The mould 1 is then reclosed.

The two parts 2 and 3 of the mould 1 have corresponding connectors 7 and 8 for the intake of a flow of high-temperature steam and for the discharge of the corresponding condensate, for the purpose of heating the mould to an operating temperature which is, for example, 170°C.

These parts of the mould also have respective connectors 9 and 10 communicating with the respective cavities 2a and 3a and intended to be connected to a low-pressure (vacuum) source.

The lower portion 3 of the mould 1 also has a connector 11 for delivering a flow of steam into the BOM chamber 5, a connector 12 for delivering a flow of preheated nitrogen to the said BOM chamber 5, and a further connector 13 for the evacuation of the BOM chamber 5.

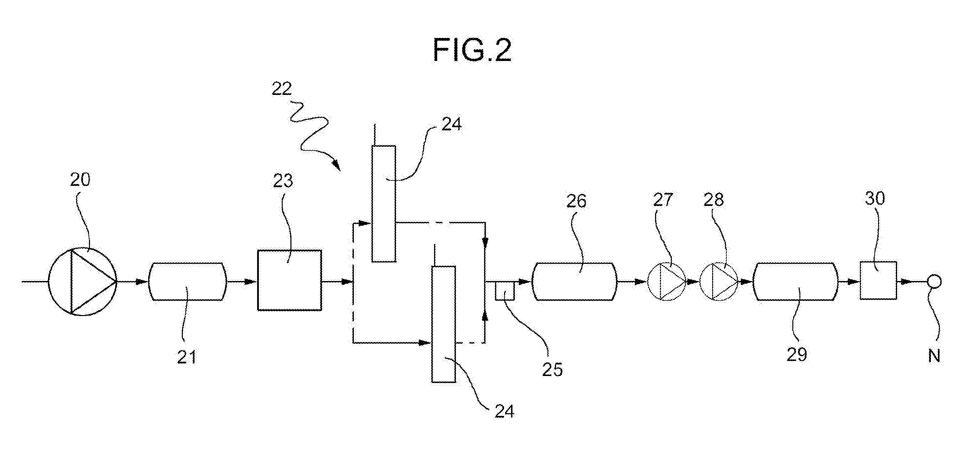

The nitrogen required for the application of the process is conveniently obtained by means of a plant for separating the nitrogen contained in the ambient air from the air itself. An exemplary embodiment of a plant of this type is shown schematically in Figure 2. This plant comprises a compressor 20 which draws air from the surrounding environment and compresses it, for example, to a pressure of 7 bar, and delivers it to a storage reservoir 21 having, for example, a capacity of 1000 litres. Downstream of the reservoir 21, the compressed air enters a nitrogen separator 22 comprising an inlet filter system 23 followed by a plurality of absorption columns 24. Filters, for example carbon filters, which retain the oxygen molecules and allow the passage of nitrogen molecules, are fitted in these columns. A control system (not shown) comprises, for example, a programmable logic controller (PLC), controls the operation of the filtration system by means of a series of controlled valves (not shown) enabling the columns 24 to operate in alternation. Switching between the columns 24 is carried out, for example, about every two minutes, to enable them to be regenerated by the expulsion of the oxygen retained in the preceding operating phase.

The percentage of residual oxygen in the gas at the outlet of the columns 24 is monitored by an analyser 25, connected to the plant control system.

The nitrogen leaving the columns 24 is sent to a second reservoir 26, which also has a capacity of 1000 litres for example, from which it then flows towards a battery of compressors 27 and 28, at the outlet of which the gas is compressed to a pressure of, for example, about 40 bar. The gas compressed in this way is stored in a storage reservoir 29, having a capacity of 5000 litres for example. This reservoir has an increased capacity, because the nitrogen is stored in the gaseous state, instead of the liquid state.

The compressed gas, which has for example a nitrogen content of about 99.5%, is finally sent through a pressure reducer 30 to a delivery line N, with a pressure of about 22 bar.

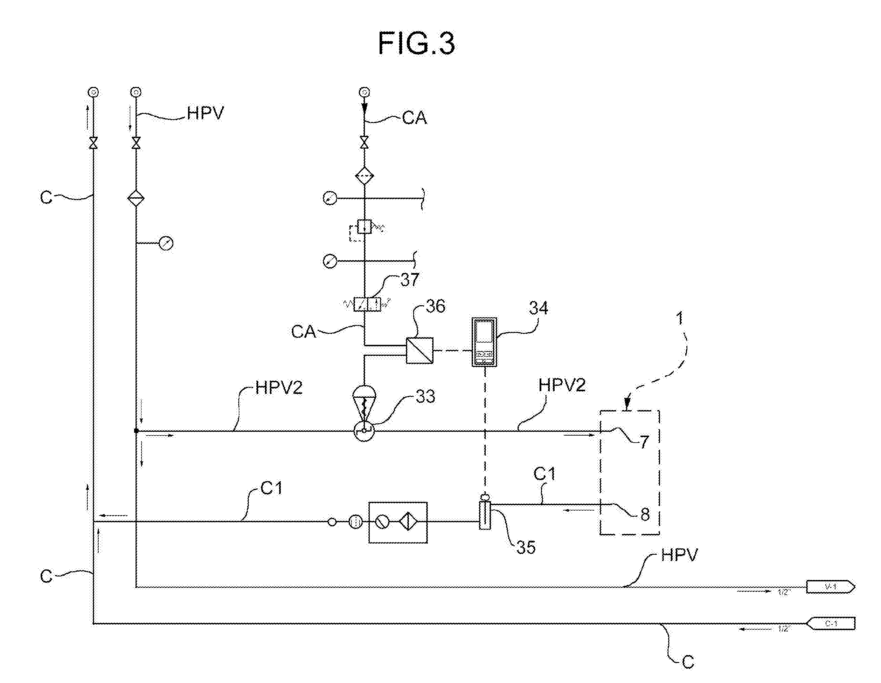

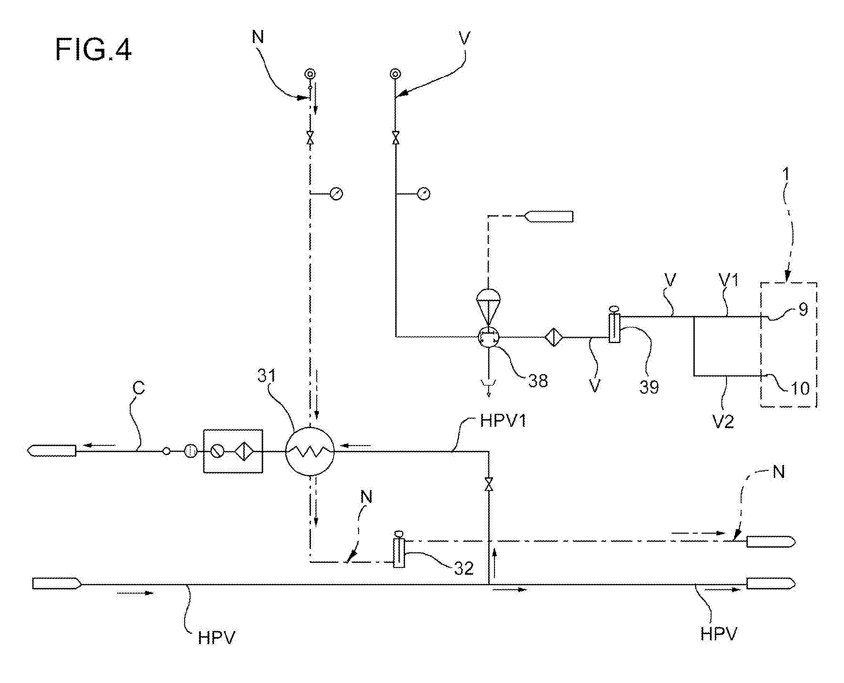

With reference to Figure 4, for the purpose of delivery to the BOM chamber 5 of a mould 1, the pressurized nitrogen line or pipe N passes through a heat exchanger 31, in which the nitrogen is heated to a temperature in the range from 140°C to 180°C (preferably about 170°C) by an exchange of heat with a flow of steam at high pressure and at high temperature, which is drawn from a source which is not shown, and is supplied to the said exchanger through a pipe indicated by HPV in Figures 3 and 4.

With reference to Figure 4, the steam at high pressure (for example, 12-13 bar) and at high temperature (for example, about 170°C) is supplied to the heat exchanger 31 through a pipe HPV1 branching from the pipe HPV. In the exchanger 31, the steam at high pressure and at high temperature transfers thermal energy to the flow of nitrogen and is converted into condensate which is evacuated through the line or pipe C. A temperature sensor 32 (Figure 4) is located in the nitrogen line N downstream of the exchanger 31, making it possible to check whether this gas has reached the desired temperature.

With reference to Figure 3, a flow of steam at high pressure from the line HPV is supplied to the connector 7 of the mould 1 through a branch pipe HPV2, to keep the mould at the desired operating temperature. The resulting condensate leaves the mould through the connector 8 and returns to the header C through a pipe C1.

A pneumatic valve 33 is interposed in the pipe HPV2 which supplies the steam at high pressure to the mould 1, and enables the temperature of this mould to be controlled. The valve 33 is controlled by a controller 34 in accordance with the signals supplied by a temperature sensor 35 associated with the mould. The controller 34 controls the valve 33 through an electropneumatic converter 36, by modulating the air flow supplied to the valve 33 through a compressed air line CA having a pressure of, for example, 8 bar. A manually operable selector 37 is conveniently interposed in this line, for activating or disabling the heating of the mould 1.

With reference to Figure 4, the vulcanizing plant also comprises a low-pressure (vacuum) delivery line V connected to a low-pressure source which is not shown. A valve with a pneumatic actuator 38 is interposed in this line V, and is followed by a temperature probe 39. Downstream of this probe, the line V is divided into two branches V1 and V2, connected to the connectors 9 and 10 of the mould 1, to evacuate the air from the vulcanization chamber 4 during operation, particularly the air located between the article or piece 6 to be vulcanized and the wall of the chamber.

In operation, the signal supplied by the temperature probe 39 can be used to detect any rupture of the inflatable chamber or BOM chamber 5.

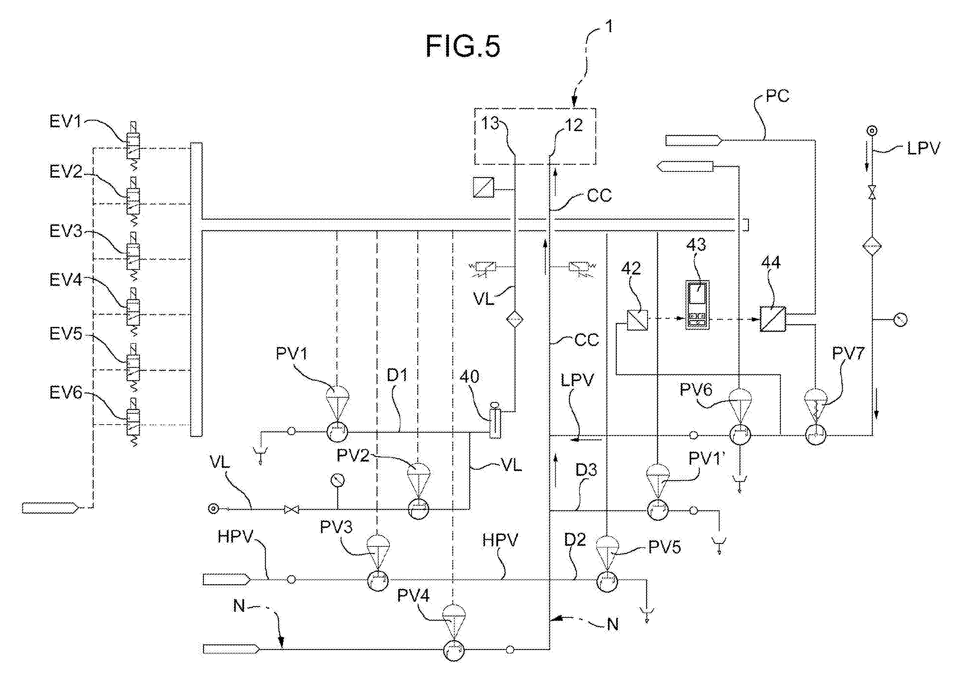

With reference to Figure 5, the equipment or plant also comprises a further line VL for delivering the low pressure or vacuum to the connector 13 of the mould 1, in other words to the BOM chamber 5. A temperature probe 40, intended essentially to detect the vulcanization temperature of the article, is positioned in this line VL.

In Figure 5, LPV indicates a line or pipe for delivering steam at low pressure (at 1-2 bar for example), which leads, together with the pipe N for heated nitrogen, into a header pipe CC leading to the connector 12 of the mould 1. The low-pressure steam flowing in the pipe LPV can be obtained from the high-pressure pipe HPV by using a reducer.

Corresponding discharge pipes D1, D2 and D3 are associated with the lines of pipes VL, HPV and LPV.

Also with reference to Figure 5, the plant comprises a plurality of pneumatically controlled valves PV1, PV2, ..., PV6, interposed in the lines D1, VL, HPV, N, D2 and LPV. The pneumatic valves PV1-PV6 are controlled by means of corresponding solenoid valves EV1-EV6.

A further pneumatically controlled valve PV1' is interposed in the discharge line D3, and is controlled by means of the solenoid valve EV1 which is also associated with the pneumatic valve PV1.

A further pneumatic valve PV7 is interposed in the line LPV and is controlled in accordance with signals supplied by a pressure transducer 42 which detects the pressure of the steam downstream of the said valve, and which supplies its own signal to a controller 43. This controller controls the valve PV7 by means of an electropneumatic converter 44 and modulates the pressure which is sent through the pneumatic pipe PC to the control input of the valve PV7.

The vulcanization equipment described above operates essentially in the following manner.

The mould 1 is heated by the high-pressure steam supplied by means of the pipe HPV. In the open condition of the mould, a raw rubber bellows is placed around the BOM chamber 5 in the retracted condition.

The mould 1 is closed by joining its two portions 2 and 3 together in a sealed way.

Low-pressure steam from the pipe LPV is then blown into the BOM chamber. This steam is supplied to the BOM chamber 5 through the header pipe CC which leads to the inlet connector 12 of the mould.

The BOM chamber therefore starts to expand, pushing the raw rubber bellows 6 towards the wall of the vulcanization chamber 4. The air located between the raw rubber bellows 6 and the wall of the chamber 4 is evacuated as a result of the low pressure applied to the connectors 9 and 10 of the mould 1 via the pipe V (Figure 3).

When the mould has been reclosed, and after the delivery of low-pressure steam, the high-pressure steam is delivered to the BOM chamber through the pipe HPV and the header pipe CC which leads to the inlet connector 12 of the mould 1 (Figure 5).

A flow of nitrogen, preheated to a temperature preferably in the range from 140°C to 180°C, and at a pressure in the range from 15 to 30 bar, preferably from 20 to 25 bar, is then delivered to the BOM chamber 5. This flow of nitrogen is supplied to the connector 12 of the mould 1, through the pipe N and the header pipe CC.

The heated nitrogen transfers heat to the bellows 6 which is vulcanized in the chamber 4 of the mould 1.

On completion of the vulcanization, the BOM chamber 5 is evacuated, through the pipe VL leading to the connector 13 of the mould 1 (Figures 1 and 5).

The mould 1 can then be opened, so that the vulcanized bellows can be removed, and a new raw rubber bellows can be placed around the BOM chamber 5.

Naturally, the principle of the invention remaining the same, the forms of embodiment and the details of construction may be varied widely with respect to those described and illustrated, which have been given purely by way of non-limiting example, without thereby departing from the scope of the invention as defined by the attached claims.

## Claims

1. A method for vulcanizing articles made from elastomeric material (6), particularly raw rubber bellows (6) for air springs, comprising the operations of:
providing a heatable mould (1) in which is formed a vulcanization chamber (4) in which an article (6), particularly a bellows (6), to be vulcanized is placed around an inflatable chamber or BOM chamber (5),
blowing an air-like medium into the inflatable chamber (5) and evacuating the air from the vulcanization chamber (6), in such a way that the said article (6) is expanded and pressed against the wall of the vulcanization chamber (4), and
then delivering a flow of gas heated to a predetermined temperature and having a predetermined pressure into the inflatable chamber (5), to vulcanize the article (6) in the expanded configuration;
the method being **characterized in that** the said gas is nitrogen preheated to a temperature in the range from 140°C to 180°C, and delivered to the inflatable chamber or BOM chamber (5) at a pressure in the range from 15 to 30 bar, and preferably in the range from 20 to 25 bar.

2. A method according to Claim 1, in which the said flow of nitrogen is obtained from a plant for separating nitrogen from the ambient air.

3. A method according to Claim 1 or 2, in which the flow of nitrogen intended for the inflatable chamber or BOM chamber (5) is heated by passing it through a heat exchanger (31) through which steam at high temperature and high pressure flows.

4. A method according to Claim 3, in which some of the said steam at high temperature and high pressure is used to heat the mould (1).

5. Equipment for vulcanizing articles (6) made from elastomeric material, particularly raw rubber bellows (6) for air springs, comprising:
a heatable mould (1) in which is formed a vulcanization chamber (4) containing an inflatable chamber or BOM chamber (5) around which there can be placed an article (6), particularly a bellows (6), to be vulcanized,
delivery means (LPV, HPV) for blowing an air-like medium into the inflatable chamber (5);
low-pressure delivery means (V) for evacuating the air from the vulcanization chamber (4), in such a way that, during operation, the said article (6) can be expanded and pressed against the wall of the vulcanization chamber (4), and
further delivery means (N) associated with the inflatable chamber (5) and capable of delivering a flow of gas heated to a predetermined temperature and having a predetermined pressure into the said chamber (5), to vulcanize the article (6) in the expanded configuration;
the equipment being **characterized in that** the said further delivery means (N) are designed to deliver to the inflatable chamber (5) nitrogen preheated to a temperature in the range from 140°C to 180°C, at a pressure in the range from 15 to 30 bars, and preferably in the range from 20 to 25 bars.

6. Equipment according to Claim 5, additionally comprising a plant for separating nitrogen from the ambient air.

7. Equipment according to Claim 5 or 6, in which the flow of nitrogen intended for the inflatable chamber or BOM chamber (5) is heated by passing it through a heat exchanger (31) through which steam at high temperature and high pressure flows.

8. Equipment according to Claim 7, in which some of the said steam at high temperature and high pressure is used to heat the mould (1).
